# EUROPÄISCHE PATENTANMELDUNG

(11) **EP 4 640 625 A1**
(43) Veröffentlichungstag der Anmeldung: **29.10.2025**
(21) Anmeldenummer: 24172217.2
(22) Anmeldetag: 24.04.2024
(51) Int. Cl.: C01B 17/50, C01B 17/76, C01B 17/80

(54) **VERFAHREN ZUR GEWINNUNG VON SCHWEFELSÄURE**

(71) Anmelder: P & P Industries AG, 8074 Raaba-Grambach (AT)
(72) Erfinder: Zorn, Paul, 8045 Graz (AT)
(74) Vertreter: Schwarz & Partner Patentanwälte GmbH

(57) **Zusammenfassung**

Die gegenständliche Erfindung betrifft ein Verfahren zur Herstellung von Schwefelsäure, umfassend
a) den Schritt der Herstellung eines Schwefeldioxid umfassenden Prozessstroms aus einem schwefelhaltigen Medium (11), welches zu Schwefeldioxid oxidierbare Schwefelverbindungen umfasst, durch Oxidation,
indem das schwefelhaltige Medium (11) mit einem ersten Gasstrom (10), welcher Sauerstoff umfasst, in Kontakt gebracht wird, und
b) die Weiterverarbeitung des im Schritt a) erhaltenen, Schwefeldioxid umfassenden Prozessstroms zu Schwefelsäure.
dadurch gekennzeichnet, dass im Schritt a) ein zweiter Gasstrom (9), welcher Schwefeldioxid umfasst, mit dem schwefelhaltigen Medium (11) und dem ersten Gasstrom (10) in Kontakt gebracht wird.

## Beschreibung

Die vorliegende Erfindung betrifft ein Verfahren und eine Vorrichtung zur Herstellung von Schwefelsäure, insbesondere ultrareiner Schwefelsäure.

### Hintergrund der Erfindung

Schwefelsäure gehört zu den wichtigsten anorganischen Grundchemikalien.

Die Produktion von Schwefelsäure umfasst einen mehrstufigen Prozess, charakterisiert durch die Umsetzung von schwefelhaltigen Medien zu Schwefeltrioxid gefolgt von einer anschließenden Weiterverarbeitung zu Schwefelsäure.

Hierzu werden in einem ersten Schritt schwefelhaltige Medien in einer Brennkammer mit kohlenstoffhaltigen Brennstoffen und Umgebungsluft zu Schwefeldioxid verbrannt.

Als Hauptbestandteil der eingesetzten schwefelhaltigen Medien wird häufig Schwefelwasserstoff als Quelle für elementaren Schwefel verwendet (de Crisci et al., International Journal of Hydrogen Energy (2018)).

In einem weiteren Schritt wird das entstandene Schwefeldioxid mit Luftsauerstoff zu Schwefeltrioxid, meist unter Zuhilfenahme eines Katalysators, oxidiert.

Das im Prozess erzeugte Schwefeltrioxid wird anschließend in einem Kondensor oder Absorber mit Wasser, Dünnsäure oder konzentrierter Schwefelsäure weiter zu Schwefelsäure kondensiert.

Bisherige Verfahren zur Herstellung von Schwefelsäure sind hingegen mit mehreren Nachteilen verbunden.

Zum einen sind die oben angeführten Prozessschritte dadurch gekennzeichnet, dass diese sehr energieintensiv und umweltbelastend sind, insbesondere durch das Emittieren von klimaschädlichem Kohlenstoffdioxid und Schwefeldioxid während des Prozesses.

Zudem bedürfen Abgase mit einem höheren Gehalt an Schwefeldioxid einer zusätzlichen Aufbereitung (z.B. Alkaliwäsche) und verursachen dadurch höhere Betriebskosten.

Weiters werden durch die Verwendung von Umgebungsluft bei der Oxidation hohe und dadurch energieintensive Prozessstromvolumina mit hohen Anteilen an inerten Stickstoffverbindungen erzeugt, welche durch die gesamte Anlage geführt werden müssen und somit eine Vergrößerung der Produktionsanlage erfordert.

In der Vergangenheit wurden daher unterschiedliche Strategien entwickelt, um eine effizientere und umweltfreundlichere Herstellung von Schwefelsäure zu gewährleisten.

Beispielsweise kann angefallene Abfallschwefelsäure als schwefelhaltiger Rohstoff zur Schwefelsäureherstellung eingesetzt werden, um die Nachhaltigkeit des Prozesses zu erhöhen. Abfallschwefelsäuren entstehen beispielsweise u.a. in der metallurgischen und chemischen Industrie. So fallen z.B. bei der thermischen Behandlung schwefelhaltiger Roh-, Hilfs- und Reststoffe Abfallschwefelsäuren an.

Die EP 3 792 220 A1 beschreibt ein umweltfreundliches und effizientes Verfahren zur Gewinnung von Schwefelsäure aus verunreinigten Schwefelverbindungen, insbesondere aus einer Abfallschwefelsäure, wobei die Schwefelverbindungen zu Schwefeltrioxid oxidiert werden, welches an einer Aktivkohle adsorbiert. In dem offenbarten Verfahren wird kein Abwasser produziert und erfordert zudem keinen Chemikalieneinsatz.

Eine weitere Problematik betrifft die Gefahr einer Überhitzung der stark exothermen Oxidationsreaktion aufgrund einer unzureichenden Regelung des Prozesses.

Weiteres ist bekannt, dass die Effizienz und Wirtschaftlichkeit des Schwefelsäureherstellungsprozesses mit zunehmenden Qualitätsanforderungen an das Produkt aufgrund weiterer Aufreinigungsschritte deutlich abnimmt.

Vor allem die Herstellung von ultrareiner Schwefelsäue in Elektronikqualität ist mit hohen Herstellungs- und Entsorgungskosten verbunden.

Ultrareine Schwefelsäure in Elektronikqualität ist bekannt als eine wesentliche Grundchemikalie in der Fertigung von Halbleitern, Leiterplatten und Pharmazeutika.

Häufig finden Metallverunreinigungen Eingang in Schwefelsäure, da aufgrund der hohen Temperaturen und Festigkeitsansprüchen industrielle Großanlagen aus Stählen gebaut werden. Solche Metallverunreinigungen müssen in angeschlossenen thermischen Trennverfahrensschritten, welche aus Destillations- und Rektifikationsprozessen bestehen können, energieintensiv entfernt werden, um ultrareiner Schwefelsäure in Elektronikqualität herzustellen.

Zudem müssen Metalloxide, welche beispielsweise durch Abfallschwefelsäure eingebracht werden, ebenfalls aufwändig abgetrennt werden, um die erforderliche Qualität von ultrareiner Schwefelsäure sicherzustellen.

Die Qualitätsanforderungen von ultrareiner Schwefelsäurereinheit in Elektronikqualität sind beispielsweise in der SEMI C44 Spezifikation aufgeführt. Die darin definierten Grenzwerte für Metallverunreinigungen in Schwefelsäure finden sich im niedrigen ppm, ppb und ppt Bereich, welche in bisher bekannten Verfahren oftmals nicht eingehalten werden.

In der US 2011/0318260 A1 wird ein Verfahren zur Herstellung von hochreiner Schwefelsäure unter Verwendung von industriellem Schwefeltrioxid als Ausgangsprodukt offenbart. Das Schwefeltrioxid wird vergast und mit Schwefelsäure absorbiert, um hochreine Schwefelsäure herzustellen.

Ein weiteres Verfahren zur Herstellung von ultrareiner Schwefelsäure wird in CN 115583632 beschrieben, in welchem Schwefeltrioxid als Ausgangsprodukt in mehreren spezifischen Schritten gereinigt wird. Das gereinigte Schwefeltrioxid reagiert anschließend mit Schwefelsäure in einem Absorptionsturm, um weiters durch Kühlung, Entgasung, und Filterung die erforderliche Qualität der Schwefelsäure zu erhalten.

US 6,740,302 B2 bezieht sich auf ein Verfahren zur Herstellung hochreiner Schwefelsäure, in dem eine Wasserstoffperoxidlösung zu einem Oleum (rauchende Schwefelsäure) zugegeben wird, um hochreines Schwefeltrioxid zu gewinnen. Das Schwefeltrioxid wird anschließend mit Inertgas angereichert und zu Schwefelsäure absorbiert.

### Zusammenfassung der Erfindung

Der vorliegenden Erfindung liegt die Aufgabe zugrunde, ein verbessertes Verfahren zur Herstellung von Schwefelsäure zur Verfügung zu stellen.

Die Aufgabe wird gelöst durch ein Verfahren zur Herstellung von Schwefelsäure, umfassend
a) den Schritt der Herstellung eines Schwefeldioxid umfassenden Prozessstroms aus einem schwefelhaltigen Medium, welches zu Schwefeldioxid oxidierbare Schwefelverbindungen umfasst, durch Oxidation,
   indem das schwefelhaltige Medium mit einem ersten Gasstrom, welcher Sauerstoff umfasst, in Kontakt gebracht wird, und
b) die Weiterverarbeitung des im Schritt a) erhaltenen, Schwefeldioxid umfassenden Prozessstroms zu Schwefelsäure,
dadurch gekennzeichnet, dass im Schritt a) ein zweiter Gasstrom, welcher Schwefeldioxid umfasst, mit dem schwefelhaltigen Medium und dem ersten Gasstrom in Kontakt gebracht wird.

Ein weiterer Aspekt der vorliegenden Erfindung betrifft eine Vorrichtung zur Durchführung eines Verfahrens umfassend einen Oxidationsofen zur Herstellung eines Schwefeldioxid umfassenden Prozessstroms mit einer ersten Zuleitung für ein schwefelhaltiges Medium, welches zu Schwefeldioxid oxidierbare Schwefelverbindungen umfasst, einer zweiten Zuleitung für einen ersten Gasstrom, welcher Sauerstoff umfasst, und eine Ableitung für den Prozessstrom,
dadurch gekennzeichnet, dass die Vorrichtung eine dritte Zuleitung für einen Schwefeldioxid umfassenden zweiten Gasstrom umfasst.

Bevorzugte Ausführungsformen sind in den Unteransprüchen angeführt.

### Kurzbeschreibung der Figuren

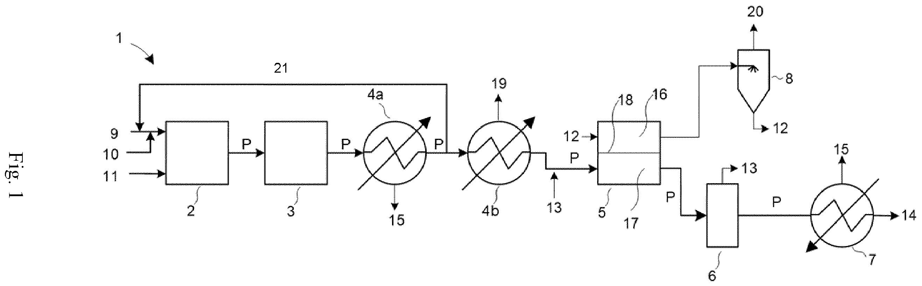

Fig. 1 zeigt eine vereinfachte Darstellung des erfindungsgemäßen Verfahrens.

### Beschreibung der Ausführungsformen

Unter dem Begriff "Prozessstrom" wird ein Strom verstanden, welcher Schwefeldioxid umfasst und ausgehend von Schritt a) in einem weiteren Schritt b) zu Schwefelsäure weiterverarbeitet wird. Der Prozessstrom kann neben dem zur Herstellung von Schwefelsäure erforderlichen Schwefeldioxid auch noch weitere Bestandteile, insbesondere Schwefeltrioxid, Sauerstoff und Inertgase wie Stickstoff, umfassen. Die Zusammensetzung der weiteren

Bestandteile des Prozessstroms kann im Zuge des Weiterverarbeitungsschritts b) variieren, da die weiteren Bestandteile dem Prozessstrom zugeführt und/oder vom Prozessstrom abgetrennt werden können.

Der zur Weiterverarbeitung zu Schwefelsäure erforderliche Prozessstrom wird in einem ersten Schritt a) durch Oxidation des schwefelhaltigen Mediums, welches zu Schwefeldioxid oxidierbare Schwefelverbindungen umfasst, mit einem ersten Gasstrom, welcher Sauerstoff umfasst, und einem zweiten Gasstrom, welcher Schwefeldioxid umfasst, hergestellt.

Unter dem Begriff "oxidierbare Schwefelverbindungen" sind schwefelhaltige Verbindungen zu verstehen, in denen der enthaltene Schwefel (S) eine Oxidationszahl von unter +4 aufweist, wie beispielsweise H₂S oder CS₂.

Der erste, Sauerstoff umfassende Gasstrom und der zweite, Schwefeldioxid umfassende Gasstrom können dem Verfahren getrennt, insbesondere aber auch nach vorheriger Mischung der beiden Ströme zugeführt werden.

Vorzugsweise umfasst der nach Schritt a) hergestellte Prozessstrom neben Schwefeldioxid zusätzlich weitere Bestandteile wie beispielsweise Schwefeltrioxid, Wasser, Sauerstoff und Stickstoff.

Es hat sich überraschenderweise gezeigt, dass das Inkontaktbringen des Schwefeldioxid umfassenden zweiten Gasstroms mit dem schwefelhaltigen Medium und dem ersten Gasstrom in Schritt a) Verbesserungen im Verfahren bewirkt.

Durch das Einbringen des zweiten Gasstroms in Schritt a) wird insbesondere eine Stabilisierung der stark exothermen Oxidationsreaktion erreicht, wodurch die Widerstandsfähigkeit der Oxidationsreaktion gegenüber einem thermischen Durchgehen erhöht wird.

Unter dem Begriff "thermisches Durchgehen" wird im Allgemeinen eine Überhitzung einer exothermen chemischen Reaktion oder einer technischen Apparatur aufgrund eines sich selbst verstärkenden Wärme produzierenden Prozesses verstanden.

Somit wird die Gefahr eines thermischen Durchgehens während des Schwefelsäureherstellung gegenüber gängigen Verfahren deutlich reduziert.

Mit dem Einbringen von Schwefeldioxid im zweiten Gasstrom wird anstelle von anderen inerten Medien wie z.B. dem in Luft enthaltenen Stickstoff, ein Reaktionsprodukt zugeführt und kann somit die Fracht an anderen inerten Medien wie z.B. Stickstoff, welche energieintensiv durch die gesamte Anlage geführt werden muss, reduziert werden. Somit wird durch das erfindungsgemäße Verfahren die Energieeffizienz des Prozesses gegenüber herkömmlichen Verfahren erhöht.

Um den für die Oxidation in Schritt a) notwendigen Sauerstoff zuzuführen, kann der Sauerstoff des ersten Gasstroms in Form von Sauerstoff-angereicherter Luft oder reinem Sauerstoff zugeführt werden.

Es hat sich herausgestellt, dass die Verwendung von Luft als Oxidationsmittel unvorteilhaft ist, da die Stickstofffracht im Prozessstrom die Weiterverbreitung zu Schwefelsäure erschwert.

Durch die Verwendung von Sauerstoff oder Sauerstoff-angereicherter Luft kann der Stickstoffanteil im Prozessstrom weiter reduziert werden. Dies hat den Vorteil, dass eine substantielle Reduktion des Volumens des Prozessstroms bei gleichbleibendem Sauerstoffgehalt erzielt werden kann. Resultierend aus der Reduktion des Prozessstromvolumens wird die benötigte Energie für die Weiterverarbeitung zu Schwefelsäure deutlich verringert.

Vorzugsweise weist der erste Gasstrom eine Temperatur von 5 bis 50°C und einen Druck von 5 bis 50 kPa auf.

Gemäß einer vorteilhaften Ausführungsform des Verfahrens besteht der erste Gasstrom aus Sauerstoff-angereicherter Luft.

Unter dem Begriff "Sauerstoff-angereicherte Luft " ist ein Gasgemisch aus Stickstoff und Sauerstoff zu verstehen, wobei der Anteil an Sauerstoff über dem Sauerstoffgehalt von Luft (über 21 Vol.-%) liegt.

In einer besonders vorteilhaften Ausführungsform des Verfahrens beträgt der Sauerstoffgehalt des ersten Gasstroms mindestens 22 Vol.-%, vorzugsweise mindestens 25 Vol.-%, vorzugsweise bis zu 92 Vol.-%.

Bevorzugt wird der Sauerstoffgehalt des ersten Gasstroms anhand des Sauerstoffgehalts des im Schritt a) erhaltenen Prozessstroms geregelt.

Es hat sich gezeigt, dass mit der Regelung des Sauerstoffgehalts des ersten Gasstroms in Abhängigkeit des Sauerstoffgehalts des im Schritt a) erhaltenen Prozessstroms die Effizienz des Verfahrens weiter erhöht wird.

Der Sauerstoffgehalt des ersten Gasstroms sowie des im Schritt a) erhaltenen Prozessstroms kann nach dem Fachmann bekannten Methoden bestimmt werden. Die Bestimmung des Sauerstoffgehalts kann mittels diskreter oder kontinuierlicher Messmethoden erfolgen.

Eine Regelung kann dabei kontinuierlich (d.h. anhand der Messung des Sauerstoffgehalts zu einem gewissen Zeitpunkt) oder punktuell erfolgen.

Gemäß einer weiteren Ausführungsform ist das Verfahren dadurch gekennzeichnet, dass das Volumsverhältnis des zweiten Gasstroms und des im Schritt a) erhaltenen Prozessstroms 0,5:1 bis 3:1 beträgt.

Während der Oxidation in Schritt a) des erfindungsgemäßen Verfahrens werden die Schwefelverbindungen des schwefelhaltigen Mediums in Schwefeldioxid und Schwefeltrioxid oxidiert. Die Oxidation des schwefelhaltigen Mediums kann dabei thermisch und/oder katalytisch erfolgen.

Bevorzugt erfolgt die thermische Oxidation bei einer Temperatur im Bereich zwischen 900 und 1600°, vorzugsweise zwischen 900 und 1000°C, und die katalytische Oxidation zwischen 600 und 900°C, vorzugsweise zwischen 600 und 800°C.

Es ist bekannt, dass die Temperaturregelung von exothermen Oxidationsreaktionen eine der Herausforderungen bei der Herstellung von Schwefelsäure ist. Dabei sollte eine Temperaturregelung so durchgeführt werden, dass nur so viel Wärme abgeführt wird, dass die Reaktion nicht überhitzt und gleichzeitig genügend Wärme für den Fortgang der Reaktion im System verbleibt.

Vorzugsweise wird die Temperatur der Oxidation mittels der Menge der oxidierbaren Schwefelverbindungen des schwefelhaltigen Mediums geregelt.

Bei der Abweichung von einer vorgegebenen Oxidationstemperatur kann die Menge der oxidierbaren Schwefelverbindungen erhöht oder erniedrigt werden, um die Temperatur zu regeln. Beispielsweise kann eine Steigerung der Menge des zweiten Gasstroms zu einem Absinken der Temperatur der Oxidation in Schritt a) führen. Um dies auszugleichen, kann die Menge an oxidierbaren Schwefelverbindungen des schwefelhaltigen Mediums erhöht werden, um die Temperatur entsprechend zu regeln.

Die oxidierbaren Schwefelverbindungen des schwefelhaltigen Mediums können ausgewählt sein aus der Gruppe bestehend aus Schwefelwasserstoff, Kohlenstoffdisulfid oder Mischungen davon.

Die Temperatur der Oxidation kann auch mittels der Menge des ersten Gasstroms geregelt werden.

Es kann daher die Menge des ersten Gasstroms erhöht oder erniedrigt werden, um die Temperatur der Oxidation zu regeln. Die Menge des ersten Gasstroms kann anhand des Sauerstoffgehalts des im Schritt a) erhaltenen Prozessstroms eingestellt werden.

Der Sauerstoffgehalt des im Schritt a) erhaltenen Prozessstroms beträgt bevorzugt maximal 8 Vol.-%, vorzugsweise 1 bis 8 Vol.-%, vorzugsweise 3 Vol.-%. Vorzugsweise erfolgt daher eine Regelung des Sauerstoffgehalts und/oder der Menge des ersten Gasstroms anhand des Sauerstoffgehalts des im Schritt a) erhaltenen Prozessstroms.

Eine Temperaturregelung kann ebenfalls kontinuierlich oder punktuell erfolgen.

Gemäß einer besonders bevorzugten Ausführungsform des Verfahrens umfasst der Schritt a) einen weiteren Schritt der Reduktion von durch die Oxidation erhaltenem Schwefeltrioxid zu Schwefeldioxid.

Bei der Oxidationsreaktion im Schritt a) kommt es nicht nur zur Bildung von Schwefeldioxid, sondern auch zu teilweiser Bildung von Schwefeltrioxid.

Durch die Reduktion zu Schwefeldioxid wird der Anteil an Schwefeltrioxid im Prozessstrom verringert, wodurch das Risiko einer unerwünschten Umsetzung von Schwefeltrioxid zu Schwefelsäure in Schritt a) des erfindungsgemäßen Verfahrens vermindert wird. Die Bildung von Schwefelsäure in Schritt a) ist nicht wünschenswert, da es aufgrund der korrosiven Eigenschaften der Säure zu einem Korrosionsabtrag kommen kann, wodurch der Prozessstrom verunreinigt, und die Prozessanlage beschädigt wird.

Vorzugsweise erfolgt die Reduktion von Schwefeltrioxid zu Schwefeldioxid bei einer Temperatur zwischen 600 bis 900°C.

In einer weiteren bevorzugten Ausführungsform des Verfahrens wird das Schwefeltrioxid unter Verwendung eines Oxidationsreaktors in Schwefeldioxid umgesetzt.

In dem Oxidationsreaktor können die im Prozessstrom verbleibenden Schwefeltrioxid-Reste zu Schwefeldioxid umgewandelt werden, um die Menge an Schwefeltrioxid im Prozessstrom auf ein Minimum zu reduzieren.

Am Austritt des Oxidationsreaktors kann der Schwefeldioxid umfassende Prozessstrom daher noch weiters Schwefeltrioxid, Wasser, Sauerstoff und Stickstoff umfassen.

In weiterer Folge kann der Prozessstrom in mehreren Schritten weiterverarbeitet werden.

Insbesondere kann die Weiterverarbeitung b) des Schwefeldioxid umfassenden Prozessstroms die folgenden Schritte enthalten:
c) Abtrennung von Wasser aus dem Prozessstrom mittels Kondensation
d) Abtrennung von Schwefeldioxid aus dem Prozessstrom mittels Kondensation zur Gewinnung eines konzentrierten Schwefeldioxid-Prozessstroms
e) Gewinnung von Schwefelsäure aus dem konzentrierten Schwefeldioxid-Prozessstrom.

Die Abscheidung von Wasser, welches sich durch die Oxidation im Prozessmedium angesammelt hat, wird bevorzugt nach der Oxidation durchgeführt (Schritt c)). Dabei wird der Prozessstrom auf eine erste Kondensationstemperatur, vorzugsweise auf 5 bis 15 °C bei 1 bis 1,5 bar(a) abgekühlt, wobei Wasser kondensiert und als Abfallprodukt abgeführt wird.

Der verbleibende Prozessstrom, umfassend Schwefeldioxid, Sauerstoff und Stickstoff kann weiters in Schritt d) auf eine zweite Kondensationstemperatur, vorzugsweise auf 5 bis 40°C bei Drücken von 1,5 bis 8 bar(a) abgekühlt werden, um Schwefeldioxid aus dem Prozessstrom zu kondensieren, um einen konzentrierten Schwefeldioxid-Prozessstrom herzustellen. Die verbleibenden Gase, insbesondere Stickstoff und Sauerstoff, können einer Abgasreinigung zugeführt werden.

Der nach Schritt d) resultierende konzentrierte Schwefeldioxid-Prozessstrom umfasst vorzugsweise 50 bis 95 Vol.-% Schwefeldioxid.

Im Schritt a) des erfindungsgemäßen Verfahrens kann der Schwefeldioxid umfassende zweite Gasstrom aus einer externen Quelle zugeführt werden.

In einer bevorzugten Ausführungsform stammt das Schwefeldioxid für den zweiten Gasstrom aber gänzlich oder teilweise aus einem weiteren Schritt innerhalb des Verfahrens und wird rezirkuliert.

Vorzugsweise wird daher ein Teil des in den Schritten c) und/oder d) gebildeten, Schwefeldioxid umfassenden, Prozessstroms in den Schritt a) rückgeführt.

Es hat sich gezeigt, dass durch die Rückführung eines Teils des in den Schritten c) und/oder d) gebildeten Prozessstroms in den Oxidationsschritt a) ein noch effizienteres Verfahren zur Herstellung von Schwefelsäure erreicht werden kann.

Vorzugsweise erfolgt die Rückführung eines Teils des in den Schritten c) und/oder d) gebildeten Prozessstroms kontinuierlich. Dadurch wird ein Zirkulieren eines Teils des im Prozessstroms umfassenden Schwefeldioxids im Prozess gewährleistet. Die Zirkulationsmenge des Schwefeldioxids kann dabei mit der Menge der oxidierbaren Schwefelverbindungen des schwefelhaltigen Mediums korrelieren.

Gemäß einer weiteren Ausführungsform ist das erfindungsgemäße Verfahren dadurch gekennzeichnet, dass der Schritt e) der Gewinnung von Schwefelsäure in einer elektrochemischen Zelle durchgeführt wird.

Insbesondere wird der Anode der elektrochemischen Zelle der konzentrierte Schwefeldioxid-Prozessstrom zugeführt, wobei der Kathode Wasser zugeführt wird. Bevorzugt wird das Wasser in stöchiometrischem Überschuss im Vergleich zu dem Schwefeldioxidgehalt des konzentrierten Schwefeldioxid-Prozessstroms zugeführt.

Durch Anlegen einer elektrischen Spannung wird Schwefeldioxid auf der Anodenseite zu Schwefelsäure oxidiert, wobei als Nebenprodukt Wasserstoff auf der Kathodenseite erzeugt wird, welcher für weitere Applikationen weiterverwendet werden kann. Durch das erfindungsgemäße Verfahren wird demnach zusätzlich eine wirtschaftliche Wasserstoffproduktion ermöglicht.

Die elektrochemische Reaktion in Schritt e) erfolgt bevorzugt bei einer Temperatur von 25 bis 120°C mit einem Schwefeldioxid -Umsatz von unter 99 %.

Vorzugsweise ist das in die elektrochemische Zelle eingebrachte Wasser ultrareines Wasser, welches beispielsweise durch Membrandiffusion hergestellt werden kann.

Bei der durch die Reaktion des konzentrierten Schwefeldioxid-Prozessstroms mit ultrareinem Wasser in der elektrochemischen Zelle hergestellten Schwefelsäure handelt es sich vorzugsweise um ultrareine Schwefelsäure.

Die erzeugte ultrareine Schwefelsäure entspricht vorzugsweise im Wesentlichen den Spezifikationen gemäß SEMI C44.

Weiters hat sich herausgestellt, dass die elektrochemische Zelle in einem kleineren Maßstab dimensioniert werden kann, falls der erste Gasstrom Sauerstoff-angereichte Luft enthält. Durch die Verwendung von Sauerstoff-angereichter Luft als ersten Gasstrom wird das erforderliche Prozessstromvolumen des erfindungsgemäßen Verfahrens reduziert, wodurch das für die Umsetzungsreaktion in der elektrochemischen Zelle benötigte Volumen verringert und damit die Effizienz des Verfahrens weiter erhöht wird. Das erfindungsgemäße Verfahren ermöglicht somit eine Verkleinerung der Anlagengröße durch Verringerung des Volumens von inerten Stickstoffströmen während der Schwefelsäuresynthese.

Die nach Schritt e) gewonnene Schwefelsäure, welche zusätzlich Wasser und Schwefeldioxid umfasst, kann in einem weiteren Schritt auf eine erste Verdampfungstemperatur, vorzugsweise auf 30 bis 130°C, erhitzt werden, wobei Schwefeldioxid ausgetrieben und abgeführt wird. Der Schwefeldioxid-haltige Abgasstrom kann einer Abgasreinigung und/oder erneut der elektrochemischen Zelle und/oder dem Schwefeldioxidstrom in Schritt a) zugeführt werden.

Die in Schritt e) gebildete Schwefelsäure kann auch auf eine zweite Verdampfungstemperatur, vorzugsweise auf 120 bis 260 °C bei Drücken von 0,06 bis 1 bar(a), erhitzt werden, wobei Wasserdampf abgeführt wird, um eine konzentrierte Schwefelsäure herzustellen.

Unter dem Begriff "konzentrierte Schwefelsäure" ist eine wässrige Lösung zu verstehen, welche zumindest 70 Gew.-%, vorzugsweise 95 Gew.-%, Schwefelsäure umfasst.

Die gebildete konzentrierte Schwefelsäure ist bevorzugt eine ultrareine Schwefelsäure in Elektronikqualität.

Ein weiterer Aspekt der vorliegenden Erfindung betrifft eine Vorrichtung zur Durchführung eines Verfahrens.

Gemäß einer Ausführungsform der Erfindung ist die Vorrichtung dadurch gekennzeichnet, dass die Vorrichtung einen Oxidationsreaktor zur Umsetzung von entstandenem Schwefeltrioxid zu Schwefeldioxid umfasst, welcher dem Oxidationsofen in Prozessrichtung nachgelagert angeordnet ist, wobei der Oxidationsreaktor eine Zuleitung und eine Ableitung für den Prozessstrom umfasst.

Die Vorrichtung kann weiters eine Wärmeübertragerapparatur zur Wasserabscheidung umfassen, welche dem Oxidationsofen in Prozessrichtung nachgelagert angeordnet ist, wobei die Wärmeübertragerapparatur eine Zuleitung und eine Ableitung für den Prozessstrom umfasst. Vorzugsweise umfasst die Wärmeübertragerapparatur eine zweite Ableitung für einen Teil des Prozessstroms, welche in den Oxidationsofen führt.

Bevorzugt umfasst die Vorrichtung der gegenständlichen Erfindung einen Abscheider zur Abtrennung von Gasen aus dem Prozessstrom, welcher dem Oxidationsofen in Prozessrichtung nachgelagert angeordnet ist, umfassend eine erste Zuleitung für den Prozessstrom, eine erste Ableitung für einen konzentrierten Schwefeldioxid-Prozessstrom und eine zweite Ableitung für Gase umfassend Sauerstoff und Stickstoff.

Ferner ist in einer weiteren Ausführungsform die Vorrichtung dadurch gekennzeichnet, dass ein Teil der Ableitung der Wärmeübertragerapparatur und/oder des Abscheiders als Zuleitung für den zweiten Gasstrom in den Oxidationsofen geführt wird.

In einer weiteren bevorzugten Ausführungsform ist die Vorrichtung dadurch gekennzeichnet, dass die Vorrichtung eine elektrochemische Zelle umfasst, welcher dem Abscheider in Prozessrichtung nachgelagert ist und welche eine Zuleitung für den konzentrierten Schwefeldioxid-Prozessstrom und eine Ableitung für Schwefelsäure umfasst.

Die Vorrichtung der gegenständlichen Erfindung kann zudem eine Trennapparatur umfassen, welcher der elektrochemischen Zelle in Prozessrichtung nachgelagert angeordnet ist und welche eine Zuleitung und eine Ableitung für Schwefelsäure umfasst. Vorzugsweise umfasst die Trennapparatur eine Ableitung für Schwefeldioxid und eine Ableitung für Wasser, wobei mindestens eine Ableitung von der Trennapparatur in die elektrochemische Zelle und/oder in den Oxidationsofen führt.

Der Trennapparatur nachgelagert kann eine Konzentrationsapparatur zur Aufkonzentrierung der Schwefelsäure vorgesehen sein, welche eine Zuleitung und eine Ableitung für Schwefelsäure umfasst.

Fig. 1 zeigt eine Ausführungsform des erfindungsgemäßen Verfahrens zur Gewinnung von Schwefelsäure.

In einem ersten Verfahrensschritt werden in einem Oxidationsofen 2 feste, flüssige und/oder gasförmige schwefelhaltige Medien 11 mit einem ersten Gasstrom 10, welcher Sauerstoff umfasst, und einem zweiten Gasstrom 9, welcher Schwefeldioxid umfasst, in Kontakt gebracht und oxidiert.

Der Prozessstrom wird von dem Oxidationsofen 2 in einem weiteren Schritt in einen Oxidationsreaktor 3 geleitet, in welchem Schwefeltrioxid im Prozessstrom, und/oder nicht oxidierte Schwefelverbindungen zu Schwefeldioxid umgewandelt wird.

Wasser 15, welches durch die Oxidation des schwefelhaltigen Mediums entsteht, kann optional in einer dem Oxidationsofen 2 nachgestellten Wärmeübertragerapparatur 4a auskondensieren.

Der verbleibende Prozessstrom, welcher hauptsächlich Schwefeldioxid, Sauerstoff, Stickstoff und Wasser umfasst, wird in einem weiteren Verfahrensschritt in einem Wärmeübertragerapparatur 4b weiter abgekühlt und konsekutiv Schwefeldioxid auskondensiert, wobei die verbleibenden gasförmigen Komponenten 19 des Prozessmediums abgeführt werden.

Der resultierende Prozessstrom, der nun im Wesentlichen aus Schwefeldioxid besteht, wird in einem weiteren Verfahrensschritt in flüssigem oder gasförmigem Zustand, optional gemischt mit Wasser oder Schwefelsäure, der Anode 17 der elektrochemischen Zelle 5 zugeführt, während der Kathode 16 der elektrochemischen Zelle ultrareines Wasser 12 zugeführt wird. Kathode 16 und Anode 17 der elektrochemischen Zelle 5 sind durch eine Ionenaustauschmembran 18 voneinander getrennt. Auf Anodenseite 17 wird unter Anlegen eines elektrischen Stroms Schwefeldioxid elektrochemisch zu Schwefelsäure oxidiert während auf Kathodenseite 16 Wasserstoff erzeugt wird.

Der Wasserstoff 20 kann in einem Gas-flüssig Abscheider 8 von nicht umgesetztem Wasser 12 getrennt werden und einer alternativen Applikation zugeführt werden. Abgeschiedenes Wasser 12 kann einer erneuten kathodenseitigen Einspeisung in die elektrochemische Zelle 5 und/oder einer Abwasseraufbereitung zugeführt werden.

Nicht vollständig konvertiertes Schwefeldioxid 13 wird aus der Schwefelsäure in einem weiteren Verfahrensschritt durch ein thermisches Trennverfahren in einer Trennapparatur 6 aus der erzeugten Schwefelsäure entfernt und kann erneut der Anodenseite 17 der elektrochemischen Zelle 5 zur Schwefelsäuresynthese zugeführt werden.

Durch die Verwendung von ultrareinem Wasser zusammen mit konzentrierten Schwefeldioxid-Prozessstrom sind keine substanziellen Verunreinigungen der elektrochemisch erzeugten Schwefelsäure zu befürchten.

Das restliche Wasser 15 in der gewonnenen Schwefelsäure 14 wird in einem weiteren Verfahrensschritt in einer Konzentrationsapparatur 7 auf den gewünschten Massenanteil reduziert.

Ein Teil des Schwefeldioxids und/oder des Restsauerstoffs des Prozessstroms kann nach Wärmeübertragerapparatur 4a, der Wärmeübertragerapparatur 4b und/oder der Trennapparatur 6 als Zirkulationsstrom 21 in den Oxidationsofen 2 und/oder Oxidationsreaktor 3 rückgeführt werden. Fig. 1 zeigt eine bevorzugte Ausführungsform des erfindungsgemäßen Verfahrens, in der ein Teil des Schwefeldioxids und/oder des Restsauerstoffs nach der Wärmeübertragerapparatur 4a als Zirkulationsstrom 21 in den Oxidationsofen 2 eingebracht wird.

## Patentansprüche

1. Verfahren zur Herstellung von Schwefelsäure, umfassend
a) den Schritt der Herstellung eines Schwefeldioxid umfassenden Prozessstroms aus einem schwefelhaltigen Medium (11), welches zu Schwefeldioxid oxidierbare Schwefelverbindungen umfasst, durch Oxidation,
indem das schwefelhaltige Medium (11) mit einem ersten Gasstrom (10), welcher Sauerstoff umfasst, in Kontakt gebracht wird, und
b) die Weiterverarbeitung des im Schritt a) erhaltenen, Schwefeldioxid umfassenden Prozessstroms zu Schwefelsäure (14),
**dadurch gekennzeichnet, dass** im Schritt a) ein zweiter Gasstrom (9), welcher Schwefeldioxid umfasst, mit dem schwefelhaltigen Medium (11) und dem ersten Gasstrom (10) in Kontakt gebracht wird.

2. Verfahren gemäß Anspruch 1, **dadurch gekennzeichnet, dass** der erste Gasstrom (10) aus Sauerstoff-angereicherter Luft besteht.

3. Verfahren gemäß Anspruch 1 oder 2, **dadurch gekennzeichnet, dass** der Sauerstoffgehalt des ersten Gasstroms (10) mindestens 22 Vol.-%, vorzugsweise mindestens 25 Vol.-%, vorzugsweise bis zu 92 Vol.-%, beträgt.

4. Verfahren gemäß einem der vorhergehenden Ansprüche, **dadurch gekennzeichnet, dass** der Sauerstoffgehalt des ersten Gasstroms (10) anhand des Sauerstoffgehalts des im Schritt a) erhaltenen Prozessstromes geregelt wird.

5. Verfahren gemäß Anspruch 4, **dadurch gekennzeichnet, dass** das Volumsverhältnis des zweiten Gasstroms und des im Schritt a) erhaltenen Prozessstroms 0,5:1 bis 3:1 beträgt.

6. Verfahren gemäß einem der vorhergehenden Ansprüche, **dadurch gekennzeichnet, dass** das schwefelhaltige Medium (11) thermisch und/oder katalytisch oxidiert wird.

7. Verfahren gemäß einem der vorhergehenden Ansprüche, **dadurch gekennzeichnet, dass** die Temperatur der Oxidation mittels der Menge der oxidierbaren Schwefelverbindungen des schwefelhaltigen Mediums (11) geregelt wird.

8. Verfahren gemäß einem der vorhergehenden Ansprüche, **dadurch gekennzeichnet, dass** die Temperatur der Oxidation mittels der Menge des ersten Gasstroms geregelt wird.

9. Verfahren gemäß einem der Ansprüche 4 bis 8, **dadurch gekennzeichnet, dass** der Sauerstoffgehalt des im Schritt a) erhaltenen Prozessstroms maximal 8 Vol.-%, vorzugsweise 1 bis 8 Vol.-%, vorzugsweise 3 Vol.-% beträgt.

10. Verfahren gemäß einem der vorhergehenden Ansprüche, **dadurch gekennzeichnet, dass** der Schritt a) einen weiteren Schritt der Reduktion von durch die Oxidation erhaltenem Schwefeltrioxid zu Schwefeldioxid umfasst.

11. Verfahren gemäß Anspruch 9, **dadurch gekennzeichnet, dass** das Schwefeltrioxid unter Verwendung eines Oxidationsreaktors (3) in Schwefeldioxid umgesetzt wird.

12. Verfahren gemäß einem der vorhergehenden Ansprüche, **dadurch gekennzeichnet, dass** die Weiterverarbeitung b) des Schwefeldioxid umfassenden Prozessstroms die folgenden Schritte umfasst:
c) Abtrennung von Wasser aus dem Prozessstrom mittels Kondensation
d) Abtrennung von Schwefeldioxid aus dem Prozessstrom mittels Kondensation zur Gewinnung eines konzentrierten Schwefeldioxid-Prozessstroms
e) Gewinnung von Schwefelsäure aus dem konzentrierten Schwefeldioxid-Prozessstrom.

13. Verfahren gemäß Anspruch 11, **dadurch gekennzeichnet, dass** ein Teil (21) des in den Schritten c) und/oder d) gebildeten Prozessstroms in den Schritt a) rückgeführt.

14. Verfahren gemäß einem Ansprüche 11 oder 12, **dadurch gekennzeichnet, dass** der Schritt e) der Gewinnung von Schwefelsäure in einer elektrochemischen Zelle (5) durchgeführt wird.

15. Vorrichtung (1) zur Durchführung eines Verfahrens gemäß einem der vorherigen Ansprüche umfassend einen Oxidationsofen (2) zur Herstellung eines Schwefeldioxid umfassenden Prozessstroms mit einer ersten Zuleitung für ein schwefelhaltiges Medium (11), welches zu Schwefeldioxid oxidierbare Schwefelverbindungen umfasst, einer zweiten Zuleitung für einen ersten Gasstrom (10), welcher Sauerstoff umfasst, und eine Ableitung für den Prozessstrom,
**dadurch gekennzeichnet, dass** die Vorrichtung (1) eine dritte Zuleitung für einen Schwefeldioxid umfassenden zweiten Gasstrom (9) umfasst.
